# EUROPÄISCHE PATENTSCHRIFT

(11) **EP 1 588 069 B1**
(45) Veröffentlichungstag und Bekanntmachung des Hinweises auf die Patenterteilung: **10.05.2006**
(21) Anmeldenummer: 03813048.0
(22) Anmeldetag: 16.12.2003
(51) Int. Cl.: F16D 3/38, F16D 3/41

(54) **ZAPFENKREUZ UND KREUZGELENKANORDNUNG**
SPIDER AND UNIVERSAL JOINT ARRANGEMENT
CROISILLON ET DISPOSITIF A JOINT A CROISILLON

(30) Priorität: 31.01.2003 DE 10304120
(43) Veröffentlichungstag der Anmeldung: 26.10.2005
(73) Patentinhaber: Voith Turbo GmbH & Co. KG, 89522 Heidenheim (DE)
(72) Erfinder: LINDENTHAL, Hans, 89522 Heidenheim (DE); GRAWENHOF, Peter, 89547 Dettingen (DE); WEGMANN, Holger, 89520 Heidenheim (DE)
(74) Vertreter: Dr. Weitzel & Partner
(86) Internationale Anmeldenummer: PCT/EP2003/014304
(87) Internationale Veröffentlichungsnummer: WO 2004/067981

(56) Entgegenhaltungen:
- EP-A- 1 213 502
- WO-A-03/102435
- US-A- 4 664 643
- US-A- 6 059 663
- PATENT ABSTRACTS OF JAPAN Bd. 0102, Nr. 07 (M-500), 19. Juli 1986 (1986-07-19) & JP 61 048615 A (HITACHI LTD), 10. März 1986 (1986-03-10)

## Beschreibung

Die Erfindung betrifft ein Zapfenkreuz für Kreuzgelenkanordnungen zur Übertragung von Drehmoment geeigneten Gelenkwellen, im einzelnen mit den Merkmalen des Oberbegriffs des Anspruchs 1; ferner eine Kreuzgelenkanordnung, im einzelnen mit den Merkmalen aus dem Oberbegriff des Anspruchs 16.

Zapfenkreuze für den Einsatz in Kreuzgelenkanordnungen sind in einer Vielzahl von Ausführungen bekannt. Dabei erfolgt die Ausgestaltung und Auslegung der Geometrie des Zapfenkreuzes in der Regel in Abhängigkeit von den konkreten konstruktiven Gegebenheiten und der gewünschten Lagerung in einer Gelenkgabel. Stellvertretend wird dabei auf die Druckschrift DE 196 01 290 A1 verwiesen. Die dort beschriebene Kreuzgelenkanordnung umfaßt ein Zapfenkreuz, zwei zum Lagern der Zapfen des Zapfenkreuzes vorgesehene Gelenkgabeln, wobei jeder Zapfen des Zapfenkreuzes mittels einer Lageranordnung, umfassend ein Radiallager mit einem Außenring und einem Innenring und ein Axiallager, in einem, diesem zugeordneten, Gabelauge der Gelenkgabel gelagert ist. Der Innenring des Radiallagers bildet dabei wenigstens mittelbar eine Lauffläche des Axiallagers. Dem Innenring ist ferner ein erster in Einbaulage in axialer Richtung äußerer Bund zugeordnet, der zur Zapfenachse des in der Gelenkgabel gelagerten Zapfens hin gerichtet ist und wenigstens mittelbar einen axialen Anschlag für den Sitz des Innenringes im stirnseitigen Bereich des Zapfens bildet. Der dem Innenring des Radiallagers zugeordnete erste äußere Bund ist kraft- und/oder formschlüssig mit dem in der Gelenkgabel gelagerten Zapfen verbindbar und/oder stützt sich auf dem in der Gelenkgabel gelagerten Zapfen zum Teil ab. Dem Innenring ist in Einbaulage in axialer Richtung ferner ein zweiter innerer Bund zugeordnet, der sich radial von der Zapfenachse des in der Gelenkgabel gelagerten Zapfens weg erstreckt. Der innere Bund des Innenringes bildet dabei wenigstens mittelbar die in axialer Richtung äußere Lauffläche des Axiallagers. Der Außenring des Radiallagers weist ferner in axialer Richtung einen ersten inneren Bund auf, der sich radial in Richtung der Zapfenachse des in der Gelenkgabel gelagerten Zapfens erstreckt. Der innere Bund des Außenringes des Radiallagers bildet dabei wenigstens mittelbar die in axialer Richtung innere Lauffläche des Axiallagers. Die Schmiermittelversorgung der Lageranordnung ist ferner über eine Dichtungsanordnung, die sich an der Zapfenwurzel abstützt und zwischen dem Innenring und dem Außenring des Axiallagers angeordnet ist, gegenüber der Umgebung abgedichtet. Ein Auswechseln dieser einzelnen Dichtung bedingt jedoch den vollständigen Ausbau der gesamten Lageranordnung. Dies kann, insbesondere bei sehr großen Kreuzgelenken, zu erheblichen Problemen führen, insbesondere aufgrund des dazu erforderlichen Zeitaufwandes. Ferner können beim Ausbau der gesamten Lageranordnung auch wieder Beschädigungen in anderen Einzelelementen, insbesondere den übrigen Dichtungsteilen, hervorgerufen werden. Zwar sind Ausführungen mit die Dichtung tragenden Dichtungshaltem bekannt, diese stützen sich aber in der Regel an der Gelenkgabel ab bzw. sind an dieser befestigt. Verformungen dieser wirken sich daher negativ auf die eigentliche Dichtfunktion aus.

Abstützungen des Dichtungshalters am Zapfenkreuz sind in der Druckschrift EP 1 213 502 A1, der nicht vorveröffentlichten WO 03/102435 A1 sowie den Druckschriften US 4,664,643 und US 6,059,663 beschrieben. EP 1 213 502 A1 offenbart eine Ausführung eines Zapfenkreuzes mit einem quaderförmigen Basiskörper, an welchem sich der Dichtungshalter abstützt. Dieser trägt die Dichtung. Dazu liegt der Dichtungshalter am Basiskörper an. Dieser ist derart konzipiert, dass die Lagefixierung durch die Art der Dichtung vorgegeben ist. Relativbewegungen unter Verformung sind dabei nicht auszuschließen, was wiederum zu einer Beeinträchtigung der Dichtflächen führt. Ferner ist der Dichtungshalter unterhalb des Radiallagers in axialer Richtung angeordnet, so dass dieser Bauraum bei Auslegung des Zapfenkreuzes und der Lageranordnung zu berücksichtigen ist.

Die US 4,664,643 offenbart eine Dichtungsvorrichtung, die als integrale Einheit ausgeführt ist. Ein Dichtungshalter ist nicht vorgesehen. Die Dichtung ist formschlüssig mit dem Zapfen verbunden.

US 6,059,663 offenbart eine Ausführung mit Dichtungshalter, der sich an der Lagerbuchse des Radiallagers abstützt. Dabei werden Verformungen an der Lagerbuchse unter Belastung auf den Dichtungshalter mit übertragen. Die Dichtfunktion ist dadurch nicht immer sicher gewährleistet.

Der Erfindung liegt daher die Aufgabe zugrunde, eine Kreuzgelenkanordnung der eingangs genannten Art derart auszugestalten, dass neben der Gewährleistung einer sicheren Dichtfunktion eine leichte Austauschbarkeit der Dichtung möglich ist. Ferner soll sich das Zapfenkreuz durch einen geringen konstruktiven Aufwand auszeichnen und zur Übertragung sehr hoher Drehmomente geeignet sein.

Die erfindungsgemäße Lösung ist durch die Merkmale des Anspruches 1 charakterisiert. Vorteilhafte Ausgestaltungen sind jeweils in den Unteransprüchen wiedergegeben.

Erfindungsgemäß erfolgt die Abstützung der Dichtung und des Dichtungshalters dazu am Zapfenkreuz. Das Zapfenkreuz für ein Kreuzgelenk umfaßt einen, um den Mittelpunkt angeordneten Basiskörper und vier, ausgehend vom Basiskörper, abstehende Zapfen, die paarweise eine gemeinsame Achse aufweisen, wobei sich die Achsen im Mittelpunkt des Zapfenkreuzes im rechten Winkel schneiden. Jeder Zapfen weist eine konzentrisch um die jeweilige Zapfenachse angeordnete Fläche auf, die direkt eine Lauffläche für die Wälzkörper einer Wälzlagerung oder aber eine Abstützfläche für das die Lauffläche für Wälzkörper in der Wälzlagerung tragende Element bildet. Zwischen der Fläche und dem Basiskörper ist ein Übergangsbereich vorgesehen. Erfindungsgemäß ist am Basiskörper eine Funktionsfläche zur Abstützung wenigstens einer Dichteinrichtung unter Bildung einer Dichtungsfläche einer Dichtpaarung vorgesehen. Die Funktionsfläche verläuft dabei senkrecht zu einer Ebene, die von der Zapfenachse des jeweiligen Zapfens und eines in Umfangsrichtung benachbarten Zapfens aufgespannt wird. Die Funktionsfläche erstreckt sich dabei vom Übergangbereich bis wenigstens in einen Bereich, der durch einen Abstand von der Zapfenachse charakterisiert ist, der gleich oder größer dem 1,5fachen Betrag des Radius des Zapfens ist. Ferner ist der Funktionsfläche eine Zentrierfläche für das die Dichtung tragende Element zugeordnet, die senkrecht zur die Dichtfläche bildenden Funktionsfläche ausgeführt ist.

Die Abdichtfunktion der Funktionsfläche erfolgt erfindungsgemäß auf großem Durchmesser am Basiskörper. Der durch die Anordnung der Zentrierfläche bedingte Kerbverlauf befindet sich in einem spannungsarmen Bereich in sehr großem Abstand von der eigentlichen Zapfenachse. Dadurch können zusätzliche Funktionselemente am Zapfenkreuz eine Abstützung frei von einer Behinderung der Leistungsübertragung erfahren.

Gemäß einer besonders vorteilhaften Ausgestaltung ist die gesamte Funktionsfläche plan ausgeführt. Dieser Verlauf wird insbesondere den Anforderungen zur Realisierung einer Dichtpaarung durch Ausbildung der Funktionsfläche wenigstens teilweise als Dichtfläche einer berührenden Dichtung in optimaler Weise gerecht. Die Funktionsfläche kann sich dabei über die gesamte vom Basiskörper senkrecht zu der von den Zapfenachsen aufgespannten Ebene verlaufende Stirnfläche erstrecken. In diesem Fall fungieren als Zentrierflächen die jeweils benachbarten Stirnflächen, wobei diese wiederum auch die Funktion einer Funktionsfläche übernehmen können. Diese Ausführung stellt ein hohes Maß an Funktionszusammenfassung dar.

Gemäß einer weiterführenden Ausführung erstreckt sich die Funktionsfläche nur teilweise über die senkrecht zu der durch die Zapfenachsen zweier in Umfangsrichtung zueinander benachbart angeordneter Zapfen gebildeten Ebene ausgerichteten Stirnfläche in radialer Richtung kreisringförmig um den Zapfen. Der Basiskörper selbst kann quader- oder würfelförmig ausgestaltet sein, so daß sich in diesem Fall die der Funktionsfläche zugeordnete Zentrierfläche ebenfalls senkrecht zu dieser erstreckt und zusätzlich noch eine wiederum senkrecht zur Zentrierfläche verlaufende Befestigungsfläche gebildet wird. Diese Befestigungsfläche ist dabei parallel zur Funktionsfläche an der entsprechenden Stirnseite ausgeführt. Die Zentrierflächen gehen jeweils in die benachbarten Stirnflächen des Basiskörpers über.

Gemäß einer besonders vorteilhaften Ausgestaltung werden die Stirnflächen oder die durch Einarbeitung der Zentrierflächen in den Eckbereichen dieser bei kreisringförmiger Ausgestaltung der Funktionsflächen an den Stirnseiten entstehenden Befestigungsflächen mit Mitteln zur Realisierung einer Befestigung des Dichtungshalters versehen. Diese sind im einfachsten Fall als einfache Gewindebohrungen ausgeführt, die mit den Befestigungselementen zusammen wirken. Die Befestigung des Dichtungshalters erfolgt somit ebenfalls im spannungsarmen Bereich und die Lagerung der Dichtung ist nicht den Verformungen am Gabelauge unterworfen.

Eine weitere, besonders fertigungsökonomische Ausführung besteht darin, daß die gesamte vom Basiskörper um den jeweiligen Zapfen gebildete Stirnfläche als Funktionsfläche fungiert. Die Befestigung und Zentrierung des Dichtungshalters erfolgt dann an den jeweils benachbarten Stirnseiten des Basiskörpers, wobei diese wiederum Funktionsflächen sein können.

Die Ausgestaltung des Zapfens im Übergangsbereich kann vielgestaltig erfolgen. Vorzugsweise ist dieser durch einen Radius, der fertigungsbedingt in den Basiskörper mittels eines Freistiches übergeht, charakterisiert. Diese Lösung ist besonders vorteilhaft, da hier die Anordnung der Dichtung in unmittelbar räumlicher Nähe zum Basiskörper erfolgen kann.

Gemäß einer weiterführenden Ausführung kann der Übergangsbereich zwischen der Lauffläche und dem Basiskörper auch durch eine Radienabfolge mit geringer werdendem Radius bei größer werdendem Zapfendurchmesser ausgestaltet werden.

Die Einarbeitung der Funktionsfläche kann durch Schleifen oder Feindrehen erfolgen. Vorzugsweise sind die Laufflächen gehärtet, wobei als Härteverfahren die Einsatzhärtung und das Induktivhärten in Frage kommen. Der Härteauslauf kann sich dabei bis in den Übergangsbereich erstrecken.

Die erfindungsgemäße Lösung wird nachfolgend anhand von Figuren erläutert. Darin ist im einzelnen folgendes dargestellt:
- Figuren 1a und 1b: verdeutlichen in schematisch vereinfachter Darstellung den Grundaufbau eines erfindungsgemäßen Zapfenkreuzes;
- Figuren 2a und 2b Figur 3: verdeutlichten mögliche Ausgestattungen des Übergangsbereiches; zeigt eine erfindungsgemäß gestaltete Kreuzgefenkanordnung im Axialschnitt.

Beim Einsatz in einer Kreuzgelenkanordnung kann der Dichtungshalter, welcher nunmehr am Zapfenkreuz befestigt ist, auf einfache Art und Weise entfernt werden, ohne daß die gesamte Lageranordnung demontiert werden muß.

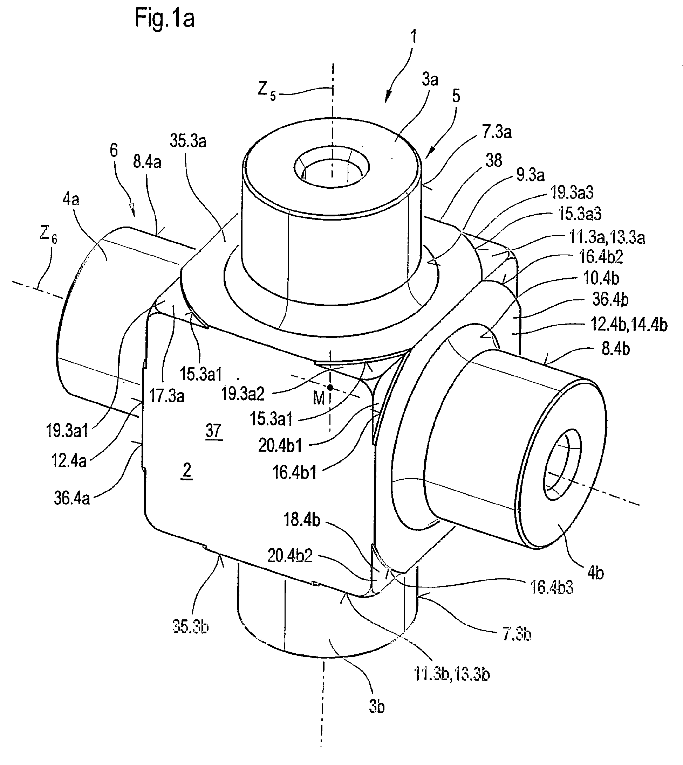

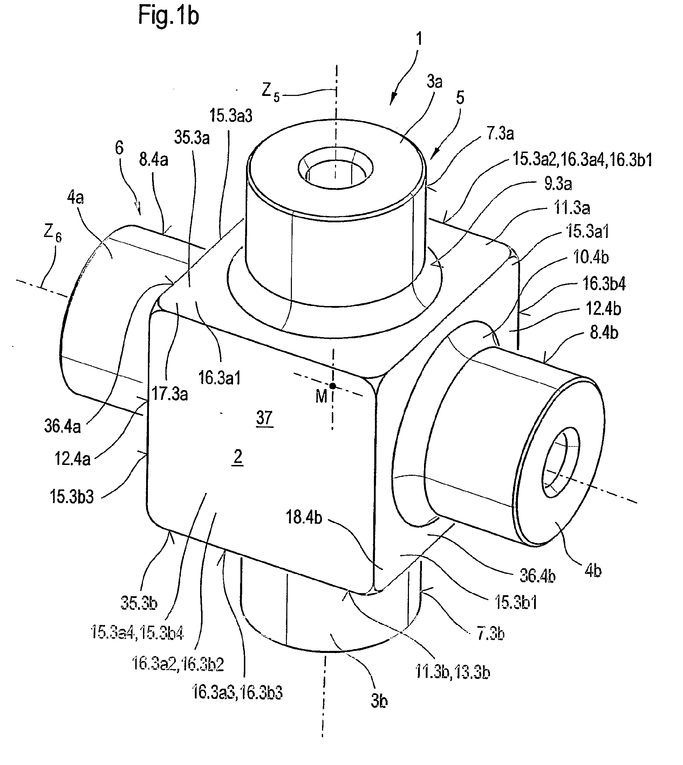

Die Figuren 1 a und 1 b verdeutlichen in schematisch vereinfachter Darstellung den Grundaufbau eines erfindungsgemäß gestalteten Zapfenkreuzes 1 für den Einsatz in Kreuzgelenken in perspektivischer Ansicht. Der Grundaufbau ist im wesentlich identisch, weshalb für gleiche Elemente die gleichen Bezugszeichen verwendet werden. Dieses umfaßt einen um einen Mittelpunkt M des Zapfenkreuzes angeordneten Basiskörper 2 und vier, ausgehend vom Basiskörper, abstehende und vom Mittelpunkt M wegverlaufende Zapfen 3a und 3b bzw. 4a und 4b, wobei die Zapfen 3a und 3b ein erstes Zapfenpaar 5 und die Zapfen 4a und 4b ein zweites Zapfenpaar 6 bilden, wobei jedes Zapfenpaar durch eine gemeinsame Zapfenachse Z₅ bzw. Z₆ charakterisiert ist. Die Zapfenachsen *Z*_{*5*} und *Z*_{*6*} schneiden sich dabei im Mittelpunkt M des Zapfenkreuzes 1 in einem rechten Winkel. Die einzelnen Zapfen 3a, 3b und 4a bzw. 4b weisen eine zylindrische und konzentrisch um die jeweilige Zapfenachse *Z*_{*5*} und *Z*_{*6*} angeordnete Fläche 7.3a, 7.3b für die Zapfen 3a und 3b bzw. 8.4a und 8.4b für die Zapfen 4a und 4b auf. Diese Fläche bildet dabei entweder direkt die Lauffläche für Wälzkörper einer Wälzlagerung oder eine Abstützfläche für das die Lauffläche eines Radiallagers tragende Element, insbesondere den Innenring eines Radiallagers einer Wälzlagerung. Zwischen den Flächen 7.3a, 7.3b bzw. 8.4a und 8.4b und dem Basiskörper 2 ist jeweils ein Übergangsbereich 9.3a bzw. 9.3b für die Zapfen 3a und 3b und 10.4a und 10.4b für die Zapfen 4a und 4b vorgesehen, wobei hier jedoch nur 9.3a und 10.4b dargestellt sind. Dieser kann vielgestaltig ausgeführt sein, ist jedoch durch eine Zunahme des Außendurchmessers der jeweiligen Zapfen 3a und 3b bzw. 4a und 4b charakterisiert. Der Basiskörper 2 bildet dann eine im Winkel, vorzugsweise senkrecht zu den Flächen 7.3a, 7.3b bzw. 8.4.a und 8.4b bzw. eine durch die Zapfenachsen *Z*_{*5*} und *Z*_{*6*} zweier in Umfangsrichtung benachbarter Zapfen, hier 3a und 4b beschreibbaren Ebene, ausgerichtete Funktionsfläche 11.3a bzw. 11.3b für die Zapfen 3a und 3b und 12.4a bzw. 12.4b für die Zapfen 4a und 4b zur Abstützung wenigstens einer in einem Dichtungshalter geführten Dichtung. Dabei werden die Anlagenflächen 11.3a, 11.3b bzw. 12.4a und 12.4b vorzugsweise von einer ringförmigen Schulter 13.3a bzw. 13.3b und 14.4a bzw. 14.4b gebildet, wobei die durch in einem Winkel oder senkrecht zur Funktionsfläche erstreckende Fläche am Basiskörper 2 als Zentrierfläche (hier dargestellt) 15.3a1, 15.3a2, 15.3a3 und 16.4a1., 16.4a2, 16.4a3 fungiert. Erfindungsgemäß erstreckt sich dabei die Funktionsfläche 11.3a bzw. 11.3b für die Zapfen 3a und 3b und 12.4a bzw. 12.4b für die Zapfen 4a und 4b bis in einen Bereich, der gleich oder größer dem 1,5fachen des Radius des Zapfens 3a, 3b bzw. 4a oder 4b beträgt. Diese ist plan ausgeführt, vorzugsweise durch Schleifen oder Drehen. Ferner bildet die Funktionsfläche jeweils wenigstens in einem Teilbereich durch die Abstützung wenigstens eines in einem Dichtungshalter geführten Dichtringes eine Dichtungsfläche 35.3a bzw. 35.3b für die Funktionsflächen 11.3a und 11.3b und 36.4a und 36.4b für die Funktionsflächen 12.4a und 12.4b. Sie bildet somit einen Bestandteil einer Dichtpaarung einer berührenden Dichtung. Gemäß einer besonders vorteilhaften Ausgestaltung ist der Basiskörper 2 im Querschnitt durch eine im wesentlichen viereckige, vorzugsweise quadratische, Querschnittsform charakterisiert. Der Basiskörper 2 ist somit quaderförmig oder würfelförmig ausgebildet.

Die einzelne Funktionsfläche erstreckt sich dabei, wie in der Figur 1b dargestellt, entweder jeweils über die gesamte, vom Basiskörper senkrecht zur von den Zapfenachsen *Z*_{*5*} und *Z*_{*6*} zweier in Umfangsrichtung zueinander benachbarter Zapfen, beispielsweise 3a und 4b, aufgespannten Ebene verlaufende Stirnfläche 2.3a, 2.3b bzw. 2.4a und 2.4b. In diesem Fall fungieren die Funktionsflächen der in Umfangsrichtung benachbart angeordneten Zapfen sowie die am Basiskörper 2 von einem Zapfen 3a, 3b, 4a, 4b freien Stirnflächen 37 und 33 als Zentrierflächen 15.3a1 - 15.3a4, 15.3b1 - 15.3b4 und 16.3a1 - 16.3a4, bzw. 16.3b1 - 16.3b4 sowie die Stirnflächen 37 und 38. Die Funktionsflächen 11.3a, 11.3b bzw. 12.4a, 12.4b sind in diesem Fall nicht rotationssymmetrisch bzw. kreisringförmig aufgebaut, sondern erstrecken sich bis in die Endbereiche des Basiskörpers 2. Im anderen, in der Figur 1a dargestellten, Fall werden die Funktionsflächen 11.3a, 11.3b bzw. 12.4a, 12.4b von der ringförmigen Schulter 13.3a und 13.3b bzw. 14.4a und 14.4b, die am Basiskörper eingearbeitet ist, gebildet. Die Ausbildung der Zentrierflächen 15.3a1 - 15.3a4, 15.3b1 - 15.3b4 bzw. 16.4a1 - 16.4a4, 16.4b1 - 16.4b4 verlaufen senkrecht zur Funktionsfläche 11.3a, 11.3b bzw. 12.4a, 12.4b. Die Anordnung der Zentrierflächen erfolgt dabei in einem Bereich, welcher für die Drehmomentübertragung nicht besonders bedeutsam ist und damit im spannungsarmen Bereich. Jede der Zentrierflächen dient dabei der Zentrierung der die sich an den Funktionsflächen 11.3a, 11.3b bzw. 12.4a, 12.4b abstützenden Dichtung. Die Befestigung dieses Dichtungshalters erfolgt vorzugsweise ebenfalls am Basiskörper 2.

Vorzugsweise dienen die Funktionsflächen 11.3a, 11.3b und 12.4a und 12.4b immer direkt als Dichtungsfläche 35.3a, 35.3b, 36.4a, 36.4 b, d.h., daß diese eine entsprechende Oberflächengestaltung aufweisen müssen, die es erlaubt, eine Dichtwirkung innerhalb einer Dichtpaarung zu bilden. Die Zentrierflächen 15.3a1 - 15.3a4, 15.3b1 - 15.3b4 und 16.3a1 - 16.3b4 bilden dabei die Zentrierflächen für die Anordnung des die Dichtung tragenden Elementes, wobei ebenfalls die Befestigung dieses Elementes am Basiskörper 2 erfolgt. Dazu sind Mittel 17.3a bzw. 17.3b und 18.4a und 18.4b zur Realisierung einer drehfesten Verbindung des Basiskörpers 2 mit dem dichtungstragenden Bauteil vorgesehen. Diese Mittel beinhalten am Basiskörper beispielsweise in diesen eingearbeitete Gewinde. Dabei erfolgt die Befestigung vorzugsweise im Bereich den von der Funktionsfläche 11.3a, 11.3b bzw. 12.4a und 12.4b freien Bereichen 19.3a1 bis 19.3a4 -19.3b1 -19.3b4 bzw. 20.4a1 - 20.4a4 - 20.4b4 am Basiskörper 2 in der in Figur 1a dargestellten Ausführung. Bei dieser werden die Befestigungsflächen 39.3a1 - 39.3a4, 39.3b1 - 39.3b4 bzw. 40.4a1 - 40.4a4, 40.4b1 - 40.4b4 ebenfalls von der Stirnfläche 2.3a, 2.3b bzw. 2.4.a und 2.4b am Basiskörper gebildet, wobei die Befestigungsfläche vorzugsweise ebenfalls in einer Ebene liegt, die jeweils senkrecht zu einer, durch die Zapfenachsen *Z*_{*5*} und *Z*_{*6*} zwei in Umfangsrichtung einander angeordneten Zapfen, beispielsweise 3a und 4a, ausgebildeten Ebene ausgerichtet ist. Die Ausrichtung der Befestigungsflächen erfolgt dabei vorzugsweise ebenfalls parallel zu den Funktionsflächen 11.3a, 11.3b bzw. 12.4a und 12.4b und senkrecht zu den Zentrierflächen 15.3a1 - 15.3a4, 15.3b1 - 15.3b4 und 16.4a1 - 16.4a4, 16.4b1 - 16.4b4. Des weiteren kann hier zusätzlich auch die Stirnfläche 37 bzw. 38 als weitere Befestigungsfläche verwendet werden.

Bei der Ausführung gemäß Figur 1 b werden auch die Befestigungsflächen von den Funktionsflächen 11.3a, 11.3b bzw. 12.4a, 12.4b sowie den Stirnseiten 37 und 38 am Basiskörper 2 gebildet.

Gemäß einer besonders vorteilhaften Ausgestaltung ist das Zapfenkreuz 1, vorzugsweise wenigstens eine Lauffläche für die Wälzkörper einer Wälzlagerung oder eine Abstützfläche für das die Lauffläche eines Wälzlagers tragende Element gehärtet. Der Härteauslauf erstreckt sich dabei vorzugsweise bis in den spannungsarmen Bereich, d.h. bis in den Übergangsbereich oder zum Teil über diesen hinaus. Als Härteverfahren kommen dabei die Einsatzhärtung oder aber das Induktivhärten in Frage. Die konkrete Wahl richtet sich dabei nach den konkreten Einsatzerfordernissen und liegt im Ermessen des zuständigen Fachmannes.

Aufgrund der Funktion der Funktionsflächen 11.3a, 11.3b bzw. 12.4a, 12.4b als Dichtungsfläche ist diese wenigstens durch einen Innendurchmesser *d*_{*I*} charakterisiert, welcher kleiner oder gleich dem der Dichtung ist, vorzugsweise jedoch kleiner oder gleich dem des dichtungstragenden Elementes ist.

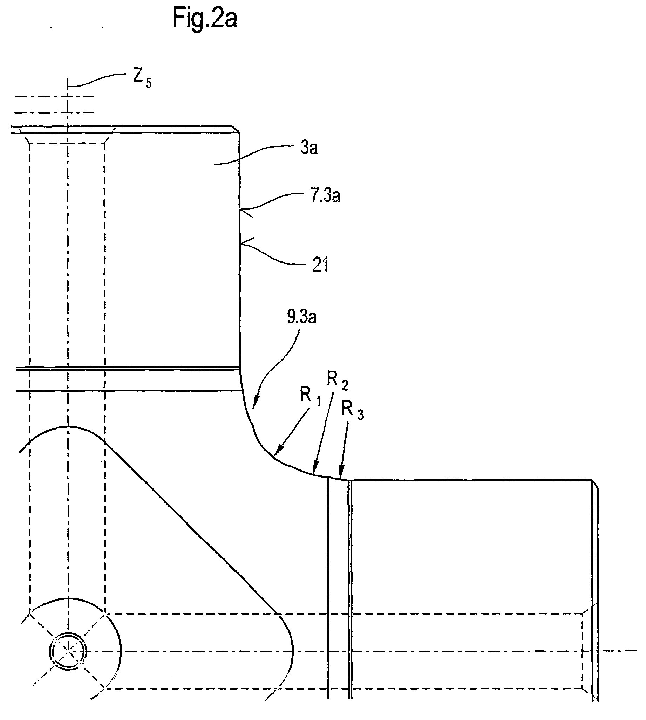

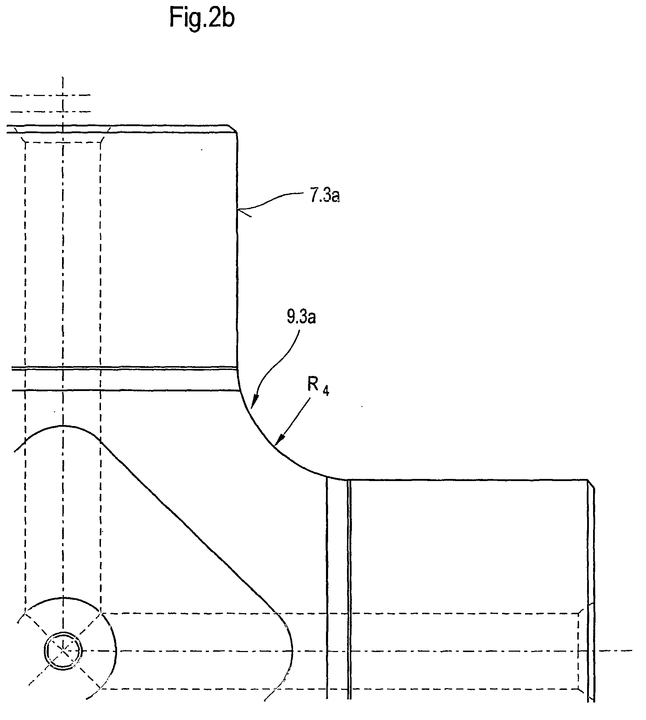

Der Übergangsbereich 9.3a, 9.3b bzw. 10.4a und 10.4b kann vielgestaltig ausgeführt sein. Gemäß einer Ausführung in Figur 2a, welche stellvertretend einen Ausschnitt aus dem Zapfenkreuz 1 für den Zapfen 3a mit dem Übergangsbereich 19.3a zum Basiskörper 2 darstellt, nimmt die Außenfläche 21 des Zapfens 3a kurvenförmig zu, wobei diese durch einen stetig größer werdenden Durchmesser charakterisiert ist und mit kleiner werdendem Krümmungsradius R zur jeweiligen Schulter 13.3a des Basiskörpers 2 verläuft. Der Übergangsbereich 9.3a ist somit durch eine Radienabfolge mit kleiner werdendem Radius charakterisiert. Eine weitere, besonders vorteilhafte, Ausgestaltungsmöglichkeit des Übergangbereiches 9.3a ist in Figur 2b wiedergegeben. Bei dieser Ausführung ist der Übergangsbereich 9.3a durch einen Radius charakterisiert. Dieser ist mit *R*₁ bezeichnet. Der Auslauf dessen zum Basiskörper 2, welcher hier mit 22 bezeichnet ist, erfolgt im wesentlichen tangential zur Funktionsfläche 11.3a bzw. über einen, für den Werkzeugauslauf üblicherweise vorzusehenden Freistich.

Für beiden Ausführungen sind die Flächen 7.3a bzw. 7.3b und 8.4a bzw. 8.4b vorzugsweise gehärtet. Die Härtung kann dabei induktiv oder aber durch Einsatzhärten erfolgen. Der Härteauslauf liegt dabei in dem im Betriebszustand des Zapfenkreuzes spannungsarmen Bereich der Schultern 13.3a, 13.3b bzw. 14.4a und 14.4b des Basiskörpers. Gemäß einer weiteren Ausgestaltung kann das gesamte Zapfenkreuz gehärtet sein, wobei der Härtevorgang entsprechend bekannter Verfahren erfolgt oder aber es kann im Anschluß an die Härtung der Fläche eine Härtung der Übergangsbereiche vorgesehen werden. Die konkrete Auswahl der gewählten Verfahren und des Härteverlaufes liegt dabei in Abhängigkeit des Einsatzerfordernisses im Ermessensbereich des zuständigen Fachmannes.

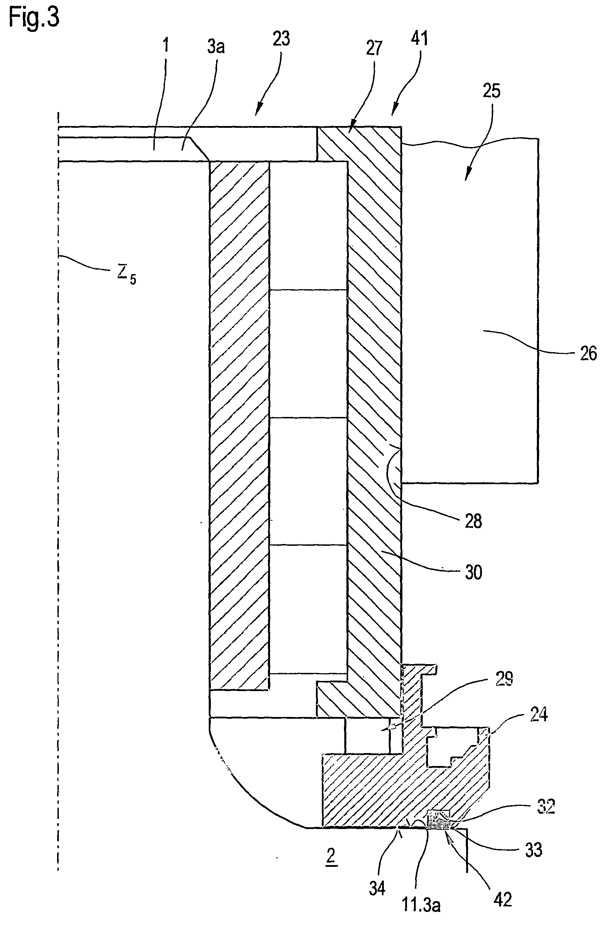

Die Figur 3 verdeutlicht anhand eines Ausschnittes aus einem Axialschnitt durch ein Kreuzgelenk 23 unter Verwendung des erfindungsgemäß gestalteten Zapfenkreuzes 1 den Grundaufbau einer besonders vorteilhaft gestalteten Kreuzgelenkanordnung mit integriertem Dichtungshalter 24. Das Kreuzgelenk 23 weist dabei zwei um 90° in Umfangsrichtung zueinander drehfest angeordnete Gelenkgabeln auf, in denen das Zapfenkreuz 1 gelagert ist. Stellvertretend ist hier zur Verdeutlichtung lediglich ein Ausschnitt aus, der Gelenkgabel 25 dargestellt, insbesondere die Gelenkgabelhälfte 26, in welcher der Zapfen 3a gelagert ist. Zur Lagerung ist dabei eine Lageranordnung 41, umfassend ein Radiallager 27 vorgesehen, welches zwischen Zapfenkreuz 1, insbesondere Zapfen 3a, und der Gabelbohrung 28 in der Gelenkgabelhälfte 26 angeordnet ist. Dabei ist es unerheblich, ob es sich bei der Gelenkgabel 25 um eine einteilige oder zweiteilige Ausführung handelt, ferner ob die Gabelbohrung 28 als Blindbohrung oder Durchgangsöffnung ausgeführt ist. Im Bereich der Zapfenwurzel ist dabei das Axiallager 29 angeordnet. Vorzugsweise stützt sich dieses am Außenring 30 des Radiallagers 27 ab. Zur Abdichtung der gesamten Lageranordnung 41 ist im Wurzelbereich des Zapfens 3a der Dichtungshalter 24 angeordnet. Dieser dient vorzugsweise gleichzeitig auch der Abstützung einer der Laufflächen 31 des Axiallagers. Ausführungen ohne Bildung der Abstützfläche für die Lauffläche oder das die Lauffläche bildende Teil des Axiallagers sind ebenfalls denkbar. In diesem Fall wird die Lauffläche von einem separaten Bauteil oder entsprechend der Ausführung der Lagerung von der den Innenring des Radiallagers bildenden Lagerbuchse gebildet. Der Dichtungshalter umschließt dabei die Lageranordnung 41, insbesondere das Radiallager 27, wenigstens teilweise im Bereich seiner axialen Erstreckung in Umfangsrichtung und ferner das Axiallager. In einer, zum Basiskörper 2 in Einbaulage gerichteten Fläche ist eine Ausnehmung 32 vorgesehen, in welcher das Dichtelement 33 angeordnet ist. Dieses bildet in Einbaulage mit der Funktionsfläche 11.3a eine Dichtpaarung 42, wobei gleichzeitig die Fläche 34 ebenfalls an der Funktionsfläche 11.3a anliegen kann, jedoch nicht zwangsläufig liegen muß. Die Fixierung des Dichtungshalters 24 in axialer Richtung, d.h. in einer Richtung, welche durch einen Vektor parallel zur Zapfenachse *Z*_{*5*} beschreibbar ist, erfolgt am Basiskörper 2 durch die Lagezuordnung in dieser Richtung zum Basiskörper 2. Die Fixierung in Umfangsrichtung ist durch die einzelnen Bauelemente der Lageranordnung, insbesondere von Radial- und Axiallager, bestimmt.

### Bezugszeichenliste

- 1: Zapfenkreuz
- 2: Basiskörper
- 2.3a, 2.3b 2.4a, 2.4b: Stirnfläche
- 3a, 3b: Zapfen
- 4a, 4b: Zapfen
- 5: Zapfenpaar
- 6: Zapfenpaar
- 7.3a, 7.3b: Fläche
- 8.4a, 8.4b: Fläche
- 9.3a, 9.3b: Übergangsbereich
- 10.4a, 10.4b: Übergangsbereich
- 11.3a, 11.3b: Funktionsfläche
- 12.4a, 12.4b: Funktionsfläche
- 13.3a, 13.3b: ringförmige Schulter
- 14.4a, 14.4b: ringförmige Schulter
- 15.3a1 - 15.3a4 15.3b1 - 15.3b4: Zentrierfläche
- 16.3a1 - 16.3a4 16.3b1 - 16.3b4: Zentrierfläche
- 17.3a, 17.3b: Mittel zur Befestigung des Dichtungshalters
- 18.4a, 18.4b: Mittel zur Befestigung des Dichtungshalters am Basiskörper
- 19.3a, 19.3b 20.3a, 20.3b 21: Außenfläche
- 22: Auslauf
- 23: Kreuzgelenk
- 24: Dichtungshalter
- 25: Gelenkgabel
- 26: Gelenkgabelhälfte
- 27: Radiallager
- 28: Gabelbohrung
- 29: Axiallager
- 30: Außenumfang
- 31: Lauffläche
- 32: Ausnehmung
- 33: Dichtelement
- 34: Fläche
- 35.3a, 35.3a 36.4a, 36.4b: Dichtungsfläche
- 37: Stirnfläche
- 38: Stirnfläche
- 39.3a1 - 39.3a4 39.3b1 - 39.3b4: Befestigungsfläche
- 40.4a1 - 40.4a4 40.4b1 - 40.4b4: Befestigungsfläche
- 41: Lageranordnung
- 42: Dichtpaarung
- M: Mittelpunkt
- *Z*_{*5*}: Zapfenachse
- *Z*_{*6*}: Zapfenachse
- R: Radius
- d: Durchmesser

## Patentansprüche

1. Kreuzgelenkanordnung (23) für zur Übertragung von Drehmoment geeigneten Gelenkwellen mit den folgenden Merkmalen:
1.1 mit wenigstens einer Gelenkgabel (25);
- mit um einen Mittelpunkt (M) angeordneten und ausgehend vom Basiskörper (2) abstehenden Zapfen (3a, 3b, 4a, 4b), welche paarweise eine gemeinsame Achse aufweisen, wobei sich die Achsen Z₅, Z₆) im Mittelpunkt (M) des Zapfenkreuzes in einem rechten Winkel schneiden;
- jeder Zapfen (3a, 3b, 4a, 4b) weist eine konzentrisch um die jeweilige Zapfenachse (Z₅, Z₆) angeordnete, eine Lauffläche bildende bzw. eine für Wälzkörper einer Wälzlagerung abstützende Fläche (7.3a, 7.3b, 8.4a, 8.4) auf ;
- mit einem Übergangsbereich (9.3a, 9.3b, 10.4a, 10.4b) zwischen der eine Lauffläche bildenden oder eine Lauffläche abstützenden Fläche (7.3a, 7.3b, 8.4a, 8.4b) und dem Basiskörper (2);
- mit an den zum Zapfen (3a, 3b, 4a, 4b) weisenden Stirnseiten am Basiskörper (2) ausgebildeten und jedem Zapfen (3a, 3b, 4a, 4b) zugeordneten Funktionsfläche (11.3a, 11.3b, 12.4a, 12.4b) zur Abstützung, wenigstens einer Dichteinrichtung unter Bildung einer Dichtfläche (35.3a, 35.3b, 36.4a, 36.4b) einer Dichtpaarung;
- die Funktionsfläche (11.3a, 11.3b, 12.4a, 12.4b) verläuft senkrecht zu einer Ebene, die von der Zapfenachse (Z₅, Z₆) des jeweiligen Zapfens (3a, 3b, 4a, 4b) und einem in Umfangsrichtung benachbart angeordneten Zapfen (3a, 3b, 4a, 4b) aufgespannt wird;
- die Funktionsfläche (11.3a, 11.3b, 12.4a, 12.4b) erstreckt sich vom Übergangsbereich bis wenigstens in einen Bereich in radialer Richtung um die Zapfenachse (Z₅, Z₆), welcher durch einen Radius beschreibbar ist, der dem mindestens 1,5-fachen des Zapfenradius entspricht;
- jeder Funktionsfläche (11.3a, 11.3b, 12.4a, 12.4b) ist wenigstens eine senkrecht zu dieser ausgebildete Zentrierfläche (15.3a1, 15.3a2, 15.3a3, 15.3a4, 15.3b1, 15.3b2, 15.3b3, 15.3b4, 16.3a1, 16.3a2, 16.3a3, 16.3a4, 16.3b1, 16.3b2, 16.3b3, 16.3b4) für die Lagefixierung eines die Dichteinrichtung tragenden Dichtungshalters zugeordnet;
1.2 mit in den Gabelaugen der Gelenkgabeln gelagerten Zapfenkreuz (1);
1.3 die Lageranordnung (41) eines jeden Zapfens (3a, 3b, 4a, 4b) umfasst wenigstens ein Radiallager (27) und ein im Bereich der Zapfenwurzel gelagertes Axiallager (29);
1.4 die Lageranordnung (41) ist mittels wenigstens einer in einem Dichtungshalter (24) gelagerten Dichtung (33) abgedichtet;
die Krenzgelenkanordnung ist **dadurch gekennzeichnet, daß**
1.5 die Dichtung (33) mit der zum jeweiligen Zapfen (3a, 3b, 4a, 4b) gehörigen Stirnseite des Basiskörpers (2) eine Dichtpaarung (42) bildet und
1.6 der Dichtungshalter (24) am Zapfenkreuz (11) befestigt ist.

2. Kreuzgelenk (23) nach Anspruch 1, **dadurch gekennzeichnet, dass** die Funktionsfläche (11.3a, 11.3b, 12.4a, 12.4b) am Zapfenkreuz (1) plan ausgebildet ist.

3. Kreuzgelenk nach Anspruch 1 oder 2, **dadurch gekennzeichnet, daß** die Funktionsfläche (11.3a, 11.3b, 12.4a, 12.4b) am Zapfenkreuz (1) sich über die gesamte vom Basiskörper (2) gebildete Stirnseite erstreckt.

4. Kreuzgelenk nach einem der Ansprüche 1 bis 3, **dadurch gekennzeichnet, dass** die Funktionsfläche (11.3a, 11.3b, 12.4a, 12.4b) am Zapfenkreuz (1) wenigstens teilweise kreisringförmig in radialer Richtung um die Zapfenachse (Z₅, Z₆) des jeweiligen Zapfens (3a, 3b, 4a, 4b) ausgebildet ist.

5. Kreuzgelenk (23) nach einem der Ansprüche 1 bis 4, **dadurch gekennzeichnet, dass** der Basiskörper (2) quader- oder würfelförmig ausgebildet ist.

6. Kreuzgelenk (23) nach Anspruch 5, **dadurch gekennzeichnet, dass** die einer Funktionsfläche (11.3a, 11.3b, 12.4a, 12.4b) zugeordneten Zentrierflächen (15.3a1, 15.3a2, 15.3a3, 15.3a4, 15.3b1, 15.3b2, 15.3b3, 15.3b4, 16.3a1, 16.3a2, 16.3a3, 16.3a4, 16.3b1, 16.3b2, 16.3b3, 16.3b4) von den jeweils benachbarten Stirnseiten gebildet werden, wobei die an diesen ausgebildeten Funktionsflächen (11.3a, 11.3b, 12.4a, 12.4b) auch als Zentrierflächen fungieren können.

7. Kreuzgelenk (23) nach Anspruch 5, **dadurch gekennzeichnet, dass** die einer Funktionsfläche (11.3a, 11.3b, 12.4a, 12.4b) zugeordneten Zentrierflächen (15.3a1, 15.3a2, 15.3a3, 15.3a4, 15.3b1, 15.3b2, 15.3b3, 15.3b4, 16.3a1, 16.3a2, 16.3a3, 16.3a4, 16.3b1, 16.3b2, 16.3b3, 16.3b4) an der gleichen Stirnseite des Basiskörpers angeordnet sind und des weiteren Befestigungsflächen vorgesehen sind, an denen Mittel zur Befestigung des die Dichtung tragenden Dichtungshalters (24) vorgesehen sind und die wenigstens teilweise an der gleichen Stirnseite ausgebildet sind und/oder an den benachbarten Stirnseiten.

8. Kreuzgelenk (23) nach Anspruch 7, **dadurch gekennzeichnet, dass** die Mittel als Gewindebohrungen ausgebildet sind.

9. Kreuzgelenk (23) nach einem der Ansprüche 1 bis 8, **dadurch gekennzeichnet, dass** der Übergangsbereich durch eine Zunahme des Durchmessers des Zapfens (3a, 3b, 4a, 4b) und einen Radius charakterisiert ist, der fertigungsbedingt in einen Freistich vor der Funktionsfläche übergeht oder tangential zu diesem ausläuft.

10. Kreuzgelenk (23) nach einem der Ansprüche 1 bis 8, **dadurch gekennzeichnet, daß** der Übergangsbereich durch eine Zunahme des Durchmessers des Zapfens und eine Radienabfolge mit kleiner werdendem Radius charakterisiert ist.

11. Kreuzgelenk (23) nach einem der Ansprüche 1 bis 10, **dadurch gekennzeichnet, dass** die einzelne Funktionsfläche (11.3a, 11.3b, 12.4a, 12.4b) und/oder Zentrierfläche (15.3a1, 15.3a2, 15.3a3, 15.3a4, 15.3b1, 15.3b2, 15.3b3, 15.3b4, 16.3a1, 16.3a2, 16.3a3, 16.3a4, 16.3b1, 16.3b2, 16.3b3, 16.3b4) durch Schleifen gefertigt ist.

12. Kreuzgelenk (23) nach einem der Ansprüche 1 bis 10, **dadurch gekennzeichnet, dass** die einzelne Funktionsfläche (11.3a, 11.3b, 12.4a, 12.4b) und/oder Zentrierfläche (15.3a1, 15.3a2, 15.3a3, 15.3a4, 15.3b1, 15.3b2, 15.3b3, 15.3b4, 16.3a1, 16.3a2, 16.3a3, 16.3a4, 16.3b1, 16.3b2, 16.3b3, 16.3b4) durch Feindrehen gefertigt ist.

13. Kreuzgelenk (23) nach einem der Ansprüche 1 bis 12, **dadurch gekennzeichnet, dass** die eine Lauffläche bildende oder wenigstens mittelbar abstützende Fläche gehärtet ist.

14. Kreuzgelenk nach Anspruch 13, **dadurch gekennzeichnet, dass** der Härteauslauf sich in den Übergangsbereich erstreckt

15. Kreuzgelenk nach einem der Ansprüche 13 oder 14, **dadurch gekennzeichnet, dass** als Härteverfahren Einsatzhärten oder Induktivhärten Verwendung finden.

## Claims

1. A cardan joint arrangement (23) for cardan shafts suitable for the transmission of torque, comprising the following features:
1.1 with at least one cardan fork (25);
- with pins (3a, 3b, 4a, 4b) arranged about a central point (M) and projecting from a basic body (2), which pins have a common axis in pairs, with the axes (Z₅, Z₆) intersect in the central point (M) of the pin cross at a right angle;
- with each pin (3a, 3b, 4a, 4b) comprising a surface (7.3a, 7.3b, 8.4a, 8.4) which is arranged concentrically about the respective pin axis (Z₅, Z₆), forms a running surface and a surface for the rolling body of a rolling bearing;
- with a transitional region (9.3a, 9.3b, 10.4a, 10.4b) between the surface (7.3a, 7.3b, 8.4a, 8.4b) forming or supporting the running surface and the basic body (2);
- with functional surfaces (11.3a, 11.3b, 12.4a, 12.4b) which face towards the pins (3a, 3b, 4a, 4b), form face surfaces on the basis body (2) and are associated with each pin (3a, 3b, 4a, 4b) for supporting at least one sealing device by forming a sealing surface (35.3a, 35.3b, 36.4a, 36.4b) of a sealing pairing;
- the functional surface (11.3a, 11.3b, 12.4a, 12.4b) extends perpendicular to a plane which is spanned by the pin axis (Z₅, Z₆) of the respective pin (3a, 3b, 4a, 4b) and a pin (3a, 3b, 4a, 4b) arranged adjacent in the circumferential direction;
- the functional surface (11.3a, 11.3b, 12.4a, 12.4b) extends from the transitional region up to at least a region in the radial direction about the pin axis (Z₅, Z₆), which can be described by a radius corresponding to at least 1.5 times the pin radius;
- each functional surface (11.3a, 11.3b, 12.4a, 12.4b) is associated with at least one centering surface (15.3a1, 15.3a2, 15.3a3, 15.3a4, 15.3b1, 15.3b2, 15.3b3, 15.3b4, 16.3a1, 16.3a2, 16.3a3, 16.3a4, 16.3b1, 16.3b2, 16.b3, 16.3b4) arranged perpendicular to the same for fixing the position of a seal holder which supports the sealing device;
1.2 with a pin cross (1) held in the fork eyes of the cardan forks;
1.3 with the bearing arrangement (41) of each pin (3a, 3b, 4a, 4b) comprising at least one radial bearing (27) and an axial bearing (29) held in the region of the pin root;
1.4 with the bearing arrangement (41) being sealed by at least one seal (33) held in a seal holder (24);
1.5 with the cardan joint arrangement being **characterized in that** the seal (33) forms a sealing pairing (42) with the face side of the basic body (2) which belongs to the respective pin (3a, 3b, 4a, 4b) and
1.6 the seal holder (24) is fastened to the pin cross (11).

2. A cardan joint (23) according to claim 1, **characterized in that** the functional surface (11.3a, 11.3b, 12.4a, 12.4b) is provided with a planar configuration on the pin cross (1).

3. A cardan joint according to claim 1 or 2, **characterized in that** the functional surface (11.3a, 11.3b, 12.4a, 12.4b) on the pin cross (1) extends over the entire face side formed by the basic body (2).

4. A cardan joint according to one of the claims 1 to 3, **characterized in that** the functional surface (11.3a, 11.3b, 12.4a, 12.4b) on the pin cross (1) is configured at least partly in a circular manner in the radial direction about the pin axis (Z₅, Z₆) of the respective pin (3a, 3b, 4a, 4b).

5. A cardan joint (23) according to one of the claims 1 to 4, **characterized in that** the basic body (2) is provided with a cuboid or cubic shape.

6. A cardan joint (23) according to claim 5, **characterized in that** the centering surfaces (15.3a1, 15.3a2, 15.3a3, 15.3a4, 15.3b1, 15.3b2, 15.3b3, 15.3b4, 16.3a1, 16.3a2, 16.3a3, 16.3a4, 16.3b1, 16.3b2, 16.b3, 16.3b4) associated with a functional surface (11.3a, 11.3b, 12.4a, 12.4b) are formed by the respectively adjacent face sides, with the functional surfaces (11.3a, 11.3b, 12.4a, 12.4b) formed on the same can also act as centering surfaces.

7. A cardan joint (23) according to claim 5, **characterized in that** the centering surfaces (15.3a1, 15.3a2, 15.3a3, 15.3a4, 15.3b1, 15.3b2, 15.3b3, 15.3b4, 16.3a1, 16.3a2, 16.3a3, 16.3a4, 16.3b1, 16.3b2, 16.b3, 16.3b4) associated with a functional surface (11.3a, 11.3b, 12.4a, 12.4b) are arranged on the same face side of the basic body, and fastening surfaces are further provided on which means are provided for fastening the seal holder (24) carrying the seal and which are formed at least partly on the same face side and/or on adjacent face sides.

8. A cardan joint (23) according to claim 7, **characterized in that** the means are configured as tapped bores.

9. A cardan joint (23) according to one of the claims 1 to 8, **characterized in that** the transitional region is **characterized by** an increase in the diameter of the pin (3a, 3b, 4a, 4b) and a radius which as a result of production converges into a recess before the functional surface or trails tangentially into the same.

10. A cardan joint (23) according to one of the claims 1 to 8, **characterized in that** the transitional region is **characterized by** an increase of the diameter of the pin and a sequence of radii with decreasing radius.

11. A cardan joint (23) according to one of the claims 1 to 10, **characterized in that** the individual functional surface (11.3a, 11.3b, 12.4a, 12.4b) and/or the centering surface (15.3a1, 15.3a2, 15.3a3, 15.3a4, 15.3b1, 15.3b2, 15.3b3, 15.3b4, 16.3a1, 16.3a2, 16.3a3, 16.3a4, 16.3b1, 16.3b2, 16.b3, 16.3b4) is produced by grinding.

12. A cardan joint (23) according to one of the claims 1 to 10, **characterized in that** the individual functional surface (11.3a, 11.3b, 12.4a, 12.4b) and/or the centering surface (15.3a1, 15.3a2, 15.3a3, 15.3a4, 15.3b1, 15.3b2, 15.3b3, 15.3b4, 16.3a1, 16.3a2, 16.3a3, 16.3a4, 16.3b1, 16.3b2, 16.b3, 16.3b4) is produced by final cutting.

13. A cardan joint (23) according to one of the claims 1 to 12, **characterized in that** the surface forming the one running surface or at least indirectly supporting the same is hardened.

14. A cardan joint (23) according to claim 13, **characterized in that** the trail of the hardening extends into the transitional region.

15. A cardan joint (23) according to one of the claims 13 or 14, **characterized in that** case hardening or induction hardening is used as a hardening method.

## Revendications

1. Joint à croisillon (23) destiné à transmettre le couple d'arbres de transmission à joint de cardan appropriés comprenant :
1.1 au moins une fourche articulée (25) comprenant :
- des tenons (3a, 3b, 4a, 4b) écartés du corps de base (2) et disposés autour d'un point central (M), lesdits tenons comportant un axe commun pour chaque paire, les axes (Z₅, Z₆) se coupant à angle droit au niveau du point central (M) du croisillon de tenon ;
- chaque tenon (3a, 3b, 4a, 4b) comprenant une surface (7.3a, 7.3b, 8.4a, 8.4) disposée concentriquement autour de l'axe de tenon (Z₅, Z₆) correspondant formant une surface de roulement et/ou soutenant le corps de cylindre d'un palier de cylindre ;
- une zone de transition (9.3a, 9.3b, 10.4a, 10.4b) située entre la surface (7.3a, 7.3b, 8.4a, 8.4b) formant la surface de roulement ou une surface de roulement et le corps de base (2) ;
- une surface fonctionnelle (11.3a, 11.3b, 12.4a, 12.4b) formée sur les faces avant orientées vers les tenons (3a, 3b, 4a, 4b) sur le corps de base (2) et associée à chaque tenon (3a, 3b, 4a, 4b) pour soutenir au moins un dispositif d'étanchéification par formation d'une surface d'étanchéité (35.3a, 35.3b, 36.4a, 36.4b) pour la paire d'étanchéification ;
- la surface fonctionnelle (11.3a, 11.3b, 12.4e, 12.4b) s'étendant perpendiculairement à un plan tendu entre l'axe de tenon (Z₅, Z₆) du tenon (3a, 3b, 4a, 4b) correspondant et un tenon (3a, 3b, 4a, 4b) disposé à proximité dans la direction périphérique ;
- la surface fonctionnelle (11.3a, 11.3b, 12.4a, 12.4b) se rétrécissant depuis la zone de transition jusqu'à au moins une zone située dans la direction radiale autour de l'axe de tenon (Z₅, Z₆), pouvant être décrite par un rayon correspondant à au moins 1,5 fois le rayon du tenon ;
- chaque surface fonctionnelle (11.3a, 11.3b, 12.4a, 12.4b) étant au moins associée à une surface de centrage (15.3a1, 15.3a2, 15.3a3, 15.3a4, 15.3b1, 15.3b2, 15.3b3, 15.3b4, 16.3a1, 16.3a2, 16.3a3, 16.3a4, 16.3b1, 16.3b2, 16.3b3, 16.3b4) perpendiculaire à celle-ci pour la fixation d'un support d'étanchéité supportant le dispositif d'étanchéification ;
1.2 un croisillon de tenon (1) disposé dans les yeux de fourche de la fourche articulée ;
1.3 la disposition de palier (41) de chaque tenon (3a, 3b, 4a, 4b) comprenant au moins un palier radial (27) et un palier axial (29) disposé dans la région de la racine du tenon ;
1.4 la disposition de palier (41) étant rendue étanche au moyen d'au moins un joint d'étanchéité (33) disposé dans un support d'étanchéité (24) ;
**caractérisé en ce que** :
1.5 le joint d'étanchéité (33) forme une paire d'étanchéification (42) avec la face avant du corps de base (2) associée au tenon (3a, 3b, 4a, 4b) correspondant ;
1.6 le support d'étanchéité (24) est fixé au croisillon de tenon (11).

2. Joint à croisillon (23) selon la revendication 1, **caractérisé en ce que** la surface fonctionnelle (11.3a, 11.3b, 12.4a, 12.4b) prend une forme plane au niveau du croisillon de tenon (1).

3. Joint à croisillon selon la revendication 1 ou 2, **caractérisé en ce que** la surface fonctionnelle (11.3a, 11.3b, 12.4a, 12.4b) située au niveau du croisillon de tenon (1) s'étend sur l'ensemble de la face avant formée par le corps de base (2).

4. Joint à croisillon selon l'une des revendications 1 à 3, **caractérisé en ce que** la surface fonctionnelle (11.3a, 11.3b, 12.4a, 12.4b) située au niveau du croisillon de tenon (1) prend au moins en partie une forme d'anneau de cercle dans la direction radiale, autour de l'axe de tenon (Z₅, Z₆) du tenon (3a, 3b, 4a, 4b) correspondant.

5. Joint à croisillon (23) selon l'une des revendications 1 à 4, **caractérisé en ce que** le corps de base (2) prend une forme de quadrilatère ou d'hexaèdre.

6. Joint à croisillon (23) selon la revendication 5, **caractérisé en ce que** les surfaces de centrage (15.3a1, 15.3a2, 15.3a3, 15.3a4, 15.3b1, 15.3b2, 15.3b3, 15.3b4, 16.3a1, 16.3a2, 16.3a3, 16.3a4, 16.3b1, 16.3b2, 16.3b3, 16.3b4) associées à une surface fonctionnelle (11.3a, 11.3b, 12.4a, 12.4b) sont formées par les faces avant avoisinantes, les surfaces fonctionnelles (11.3a, 11.3b, 12.4a, 12.4b) formées sur celles-ci pouvant également servir de surfaces de centrage.

7. Joint à croisillon (23) selon la revendication 5, **caractérisé en ce que** les surfaces de centrage (15.3a1, 15.3a2, 15.3a3, 15.3a4, 15.3b1, 15.3b2, 15.3b3, 15.3b4, 16.3a1, 16.3a2, 16.3a3, 16.3a4, 16.3b1, 16.3b2, 16.3b3, 16.3b4) associées à une surface fonctionnelle (11.3a, 11.3b, 12.4a, 12.4b) sont disposées sur la même face avant du corps de base et que l'on prévoit en outre des surfaces de fixation dotées de moyens de fixation du support d'étanchéité (24) supportant le joint d'étanchéité et formées au moins en partie sur la même face avant et/ou sur les faces avant avoisinantes.

8. Joint à croisillon (23) selon la revendication 7, **caractérisé en ce que** les moyens sont configurés comme des alésages filetés.

9. Joint à croisillon (23) selon l'une des revendications 1 à 8, **caractérisé en ce que** la zone de transition est **caractérisée par** une augmentation du diamètre du tenon (3a, 3b, 4a, 4b) et par un rayon qui se transforme en rainure de dégagement de la surface fonctionnelle ou s'étend tangentiellement par rapport à elle.

10. Joint à croisillon (23) selon l'une des revendications 1 à 8, **caractérisé en ce que** la zone de transition est **caractérisée par** une augmentation du diamètre du tenon et par une succession de rayons de taille décroissante.

11. Joint à croisillon (23) selon l'une des revendications 1 à 10, **caractérisé en ce que** la surface fonctionnelle (11.3a, 11.3b, 12.4a, 12.4b) et/ou la surface de centrage (15.3a1, 15.3a2, 15.3a3, 15.3a4, 15.3b1, 15.3b2, 15.3b3, 15.3b4, 16.3a1, 16.3a2, 16.3a3, 16.3a4, 16.3b1, 16.3b2, 16.3b3, 16.3b4) est fabriquée par polissage.

12. Joint à croisillon (23) selon l'une des revendications 1 à 10, **caractérisé en ce que** la surface fonctionnelle (11.3a, 11.3b, 12.4a, 12.4b) et/ou la surface de centrage (15.3a1, 15.3a2, 15.3a3, 15.3a4, 15.3b1, 15.3b2, 15.3b3, 15.3b4, 16.3a1, 16.3a2, 16.3a3, 16.3a4, 16.3b1, 16.3b2, 16.3b3, 16.3b4) est fabriquée par tournage de précision.

13. Joint à croisillon (23) selon l'une des revendications 1 à 12, **caractérisé en ce que** la surface formant la surface de roulement ou la soutenant au moins indirectement est trempée.

14. Joint à croisillon selon la revendication 13, **caractérisé en ce que** le trempage s'étend dans la zone de transition.

15. Joint à croisillon selon l'une des revendications 13 ou 14, **caractérisé en ce que** le procédé de trempage utilisé est un trempage à coeur ou un trempage inductif.
